# EUROPÄISCHE PATENTSCHRIFT

(11) **EP 0 453 776 B1**
(45) Veröffentlichungstag und Bekanntmachung des Hinweises auf die Patenterteilung: **05.07.1995**
(21) Anmeldenummer: 91104524.3
(22) Anmeldetag: 22.03.1991
(51) Int. Cl.: H01H 73/34, H02H 7/22, H01H 85/46

(54) **Schalteinrichtung mit einem Lastschalter oder Lasttrennschalter und einer Sicherung**
Switchgear with a circuit breaker or a load break switch and a fuse
Mécanisme de couplage avec disjoncteur ou sectionneur de charge et fusible

(30) Priorität: 14.04.1990 DE 4012173; 21.07.1990 DE 4023237
(43) Veröffentlichungstag der Anmeldung: 30.10.1991
(73) Patentinhaber: AEG Sachsenwerk GmbH, D-93053 Regensburg (DE)
(72) Erfinder: Stegmüller, Karl, Dipl.-Ing., W-8401 Wiesent (DE)
(74) Vertreter: Breiter, Achim, Dipl.-Ing.

(56) Entgegenhaltungen:
- CH-A- 311 386
- DE-A- 3 213 090
- DE-B- 1 050 430
- US-A- 3 309 478

## Beschreibung

Die Erfindung betrifft eine Schalteinrichtung gemäß dem Oberbegriff des ersten Anspruchs, wie sie beispielsweise der DE-B-1 050 430 zu entnehmen ist.

Es ist daneben bei Schalteinrichtungen mit einer Serienschaltung aus einem Hauptschalter und einer Sicherung in einem elektrischen Stromkreis, insbesondere im Primärstromkreis eines Transformators in einer Hoch- oder Mittelspannungsschaltanlage bekannt, in den Stromkreis einen Stromwandler einzuschalten, dessen Ausgangssignal beim überschreiten eines zulässigen, durch eine Auslösekennlinie vorgegebenen Stromwertes den geschlossenen Hauptschalter in die öffnungsstellung steuert. Schmelzsicherungen sprechen bis zu ihrem Mindestausschaltstrom, der etwa ihrem doppelten Nennstrcm entspricht, praktisch nicht an. Bei längeren mäßigen überströmen tritt eine Unterbrechung des Stromkreises erst nach einer relativ langen Zeit ein, wobei es auch zu einer starken überhitzung kommen kann. Kurzzeitige überlastungen treten auch beispielsweise beim Einschalten von Transformatoren bzw. bei Blitzeinschlag in das Netz auf. Hierdurch ergibt sich eine Veränderung der Sicherungs-Kennlinie, was zu zufälligen Sicherungsunterbrechungen führen kann. Die Unterbrechung des Stromkreises erfolgt üblicherweise im Betriebsstrombereich durch den Lastschalter bzw. Lasttrennschalter. Treten jedoch darüber hinausgehende Fehlerströme, insbesondere Kurzschlußströme auf, dann muß der Stromkreis durch die Schmelzsicherung aufgetrennt werden.

Der Erfindung liegt die Aufgabe zugrunde, bei einer Schalteinrichtung gemäß dem Oberbegriff des ersten Anspruchs Maßnahmen zu treffen, durch welche beim Auftreten vor Fehlstrombeanspruchungen der in den Stromkreis eingeschaltete Schalter entlastet wird und kurzzeitige hohe Stromimpulse wirkungslose bleiben.

Die Lösung dieser Aufgabe erfolgt gemäß der Erfindung durch die kennzeichnenden Merkmale des ersten Anspruchs.

Bei einer Ausgestaltung einer Schalteinrichtung gemäß der Erfindung wird nur im äußerst seltenen Fall eines größeren Fehlerstromes, also insbesondere bei primärseitigem Lichtbogenkurzschluß im Transformator durch den Hilfsschalter der Kurzschluß an der Sicherung aufgehoben, so daß die Sicherung die Unterbrechung des überlasteten Stromkreises übernimmt. Da die Ansprechzeit des Hauptschalters bzw. Lasttrennschalters deutlich länger ist als die Ansprechzeit des Hilfsschalters und die Auslöse- und Löschzeit der nachfolgenden Sicherung, wird die ünterbrechung des Stromkreises in diesen Belastungsfällen in eindeutiger Zuordnung nur von der Sicherung übernommen. Insbesondere weist der Hilfsschalter einen geradlinig verstellbaren Schaltstift auf, der elektromagnetisch antreibbar ist und vorzugsweise mechanisch parallel zur Längsachse der Sicherung angeordnet sowie gegebenenfalls an den Polen des Sicherungsträgers gehalten sein kann. Für das Trennen des Schaltstifts vom zugehörigen feststehenden Gegenkontakt kann hierbei eine Magnetspule in den zu unterbrechenden Stromkreis geschaltet sein, welche bei Überschreiten des zulässigen Stromwertes den Schaltstift in die Kontakttrennstellung bewegt. Der Schaltstift kann jedoch auch in seiner Einschaltstellung verriegelt sein. Dann braucht lediglich im Fehlerfalle die zugehörige Verriegelungseinrichtung entsperrt zu werden, was über die bereits erwähnte Magnetspule oder den für die Auslösung des Lasttrennschalters erforderlichen Stromwandler oder andere geeignete Sensoren erfolgen kann. Der Antrieb des Schaltstifts kann auch hier über eine geeignete mechanische Feder bewerkstelligt werden. Nach dem Durchbrennen der Sicherung und dem Öffnen des Trennschalters kann der Hilfsschalter wieder in seine Einschaltstellung gebracht werden. Das kann selbsttätig durch die Feder erfolgen, gegen deren Kraft der Schaltstift zuvor in die Ausschaltstellung bewegt wurde. Die erforderliche Rückstellverzögerung kann dabei durch einen Strömungsdämpfer erzielt werden, der dem Schaltstift zugeordnet ist und die Geschwindigkeit der Rückstellbewegung ausreichend vermindert. Der Schaltstift kann jedoch auch in der Ausschaltstellung verriegelt sein, die manuell oder über eine Zeitsteuereinrichtung auszulösen ist, damit der Schaltstift wieder in seine Einschaltstellung gelangen kann.

Die Erfindung ist nachfolgend anhand der Zeichnungen von Ausführungsbeispielen näher erläutert.

Es zeigen:
Figur 1 ein Prinzipschaltbild einer Schalteinrichtung mit Lastschalter und Sicherung,
Figur 2 ein Stromdiagramm,
Figur 3 eine Prinzipanordnung einer Sicherung mit Hilfsschalter,
Figur 4 einen vergrößerten Teilausschnitt der Darstellung nach Figur 3 und
Fig. 5 einen Hilfschalter mit dynamischem Kontaktantrieb.

In den Primärstromkreis eines Transformators 1 oder anderer Stromverteilungseinrichtungen bzw. elektrischer Verbraucher ist die Serienschaltung aus einem Lasttrennschalter 2 als Hauptschalter und einer Sicherung 3 gelegt. Die Sicherung 3 ist dabei insbesondere eine Hochspannungshochstromsicherung, wie sie in Mittel- oder Hochspannungsanlagen zur Anwendung gelangt und die beispielsweise bei einer Strombelastung von 2 bis 2,5 Kiloampere eine Ausschaltzeit von 5 bis 10 ms aufweist. Der Lasttrennschalter besitzt dagegen in der Regel eine Ausschalt-Eigenzeit von 40 bis 60 ms, so daß sichergestellt ist, daß die Sicherung bei zu ihrer Auslösung führender hoher Fehlerstrombeanspruchung den Stromkreis bereits unterbrochen hat, bevor der Lasttrennschalter seinerseits den Stromkreis unterbricht. Zur Steuerung des Lasttrennschalters ist dabei ein in den zu schaltenden Stromkreis gelegter Stromwandler 4 vorgesehen, der sein Steuersignal an einen Überlastauslöser 5 liefert, welcher eine mechanische Abschalteinrichtung 6 für den Lasttrennschalter 2 steuert. Im gesamten Betriebsstrom-, Überlaststrom- und unteren Feherstrombereich erfolgt hierbei das Auftrennen des Stromkreises ausschließlich über den Lasttrennschalter 2. Um die Sicherung 3 in diesen Betriebszuständen weitgehend von Strombelastungen freizuhalten, ist ihr ein Hilfsschalter 7 elektrisch parallel geschaltet, der einen Kurzschluß der Sicherung 3 bewirkt und nur bei kurzschlußartigen Fehlerströmen geöffnet wird. Dieser Hilfsschalter soll demnach in den normalen Betriebs- und Überlastbereichen also auch beim Einschalten des Transformators 1 durch die dabei auftretenden kurzen aber hohen Stromimpulse nicht ausgelöst werden. Dadurch bleibt die Sicherung 3 praktisch unbelastet und erfährt so keine beachtliche Änderung ihrer Kennlinie auch über eine lange Betriebsdauer.

Der Hilfsschalter 7 wird demzufolge abhängig vom Stromwert in dem zu schaltenden Stromkreis bei Überschreiten eines zulässigen Wertes geöffnet. Damit jedoch an sich zu hohe Stromimpulse, wie sie beim Einschalten eines Netzwerks auftreten können, nicht zur Auslösung des Hilfsschalters 7 führen, ist seine Ansprechzeit durch elektrische Verzögerungsmittel oder mechanische Trägheit entsprechend lang bemessen. Diese Ansprechverzögerung muß jedoch unter zusätzlicher Berücksichtigung der Ausschaltzeit der Sicherung 3 unter der Ausschalt-Eigenzeit des Lasttrennschalters 2 liegen.

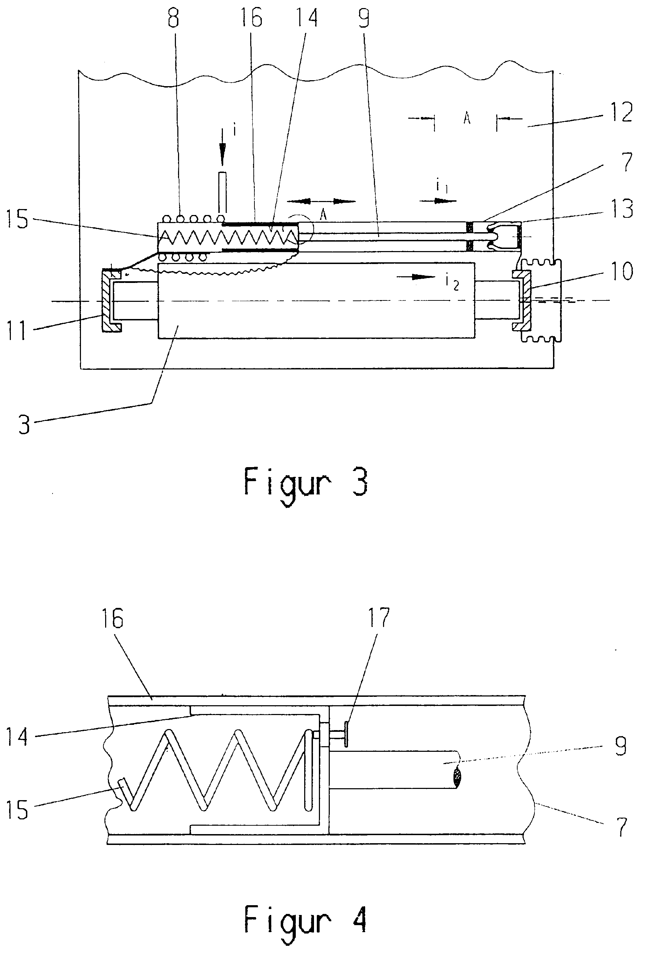

Für die Auslösung des Hilfsschalters 7 ist in den zu schaltenden Stromkreis eine Magnetspule 8 eingeschaltet, deren Kraft erst bei ausreichend hohen und ausreichend lange andauernden Stromwerten für das Öffnen des Hilfsschalters 7 ausreicht. Gemäß Figur 3 weist der Hilfsschalter 7 einen geradlinig verschiebbar gelagerten Schaltstift 9 auf, der mechanisch parallel zur Längsachse der Sicherung 3 angeordnet ist. Dabei kann der Hilfsschalter 7 an den Polen 10 bzw. 11 der Sicherung bzw. am Sicherungsträger 12 gehalten sein. Der feststehende Kontakt 13 des Hilfsschalters 7 ist elektrisch mit dem Pol 10 verbunden, während der Schaltstift 9 elektrisch mit dem Pol 11 zusammengeschaltet ist. Die Kontakte 9,13 des Hilfsschalters 7 befinden sich in einem Isolierstoffrohr, in dem auch ein mit dem Schaltstift 9 mechanisch fest verbundener magnetischer Anker 14 gegen die Kraft einer Druckfeder 15 verschiebbar gelagert ist. Die Druckfeder 15 hält den Schaltstift 9 in Eingriff mit dem Gegenkontakt 13. Auf dem Isolierrohr des Hilfsschalters 7 befindet sich die Magnetspule 8 in solcher Anordnung, daß der Anker 14 mit dem Schaltstift 9 vom Gegenkontakt 13 weggezogen wird, wenn der im zu schaltenden Stromkreis fließende Strom i einen Wert erreicht, bei dem die erzeugte magnetische Kraftwirkung den Anker 14 gegen die Kraft der vorgespannten Druckfeder 15 aus dem Gegenkontakt 13 herauszieht.

Tritt beispielsweise ein großer Fehlerstrom auf, der über dem zulässigen Stromwert liegt, dann erzeugt die Magnetspule 8 ein so hohes Magnetfeld, daß der magnetische Anker 14 den Schaltstift 9 aus dem Gegenkontakt 13 herausbewegt. Da die Sicherung 3 noch intakt ist, schaltet der Hilfsschalter 7 stromlos. Erst nach dem Öffnen der Schaltkontaktstrecke 9,13 übernimmt die Sicherung 3 den vollen Fehlerstrom und brennt in einer Zeit von 5 bis 10 ms durch, wobei gleichzeitig der entstehende Lichtbogen gelöscht und der Stromkreis unterbrochen wird. Der Schaltstift 9 des Hilfsschalters 7 hat in der Zeit bis zum Ansprechen der Sicherung 3 einen ausreichend großen Weg von beispielsweise 40 mm zurückgelegt, der ausreicht, um die maximal mögliche Schaltspannung über der Sicherung 3 zu beherrschen. Da die Ausschalt-Eigenzeit des Lasttrennschalters 2 größer ist als die Summe der Schaltzeiten des Hilfsschalters 7 und der Sicherung 3, findet eine kontrollierte Schaltfolge statt, bei der die Sicherung auf jeden Fall löscht, bevor der Lasttrennschalter 2 die Kontakttrennungsposition erreicht hat. Zwar beginnt bei dieser Anordnung die Sicherung erst zu schmelzen, wenn der Schaltstift 9 den Kurzschluß der Sicherung 3 aufhebt. Es ist jedoch bekannt, daß Schäden an einem Transformator 1 erst nach etwa 20 ms bei einem Fehlerstrom von 10 Kiloampere zu erwarten sind. Da aber die Sicherung bereits nach etwa 10 ms den Stromkreis unterbricht, entstehen keine nachteiligen Auswirkungen.

Um ein sofortiges Zurückschalten des Hilfsschalters 7 nach dem Unterbrechen des Stromkreises durch die Sicherung 3 zu vermeiden, ist dem Schaltstift 9 ein die Rücklaufgeschwindigkeit vermindernder Strömungsdämpfer zugeordnet, so daß der Hilfsschalter 7 erst nach dem Öffnen des Hauptschalters 2 in die Wiedereinschaltstellung gelangen kann. Der Strömungsdämpfer kann dabei den Anker 14 als Kolben und den betreffenden Abschnitt 16 des den Schaltstift 9 umschließenden Isolierrohres ausnutzen. Der Abschnitt 16, in dem auch die Feder 15 liegt, bildet einen geschlossenen Zylinder, wobei entweder diesem Zylinder 16 oder dem Kolben 14 ein Belüftungsventil 17 zugeordnet ist, das bei der Öffnungsbewegung des Schaltstifts 9 das im Zylinder 16 eingeschlossene Strömungsmittel weitgehend unbehindert durchströmen läßt, bei der Bewegung in der Gegenrichtung jedoch den Strömungsweg zumindest weitgehend verschließt, so daß das vorher verdrängte Strömungsmittel nur langsam wieder in den Zylinder 6 zurückströmen kann und der Kolben dementsprechend langsam zum Gegenkontakt 13 hin zurückgeführt wird.

Es ist auch möglich, den Schaltstift 9 in der Einschaltstellung gegen die Kraft einer Feder zu verriegeln, die den Schaltstift 9 aus dem Eingriff mit dem Gegenkontakt 13 zu lösen trachtet. Bei unzulässig hohen Stromwerten wird dann die entsprechende Verriegelungsvorrichtung ausgelöst und die entsprechende Feder trennt den Schaltstift 9 vom Gegenkontakt 13. Die Rückschaltung kann dann manuell erfolgen. Daneben ist es aber auch möglich, bei einer Anordnung gemäß Figur 3 eine Verriegelungsvorrichtung vorzusehen, die den Schaltstift 9 in der Ausschaltstellung arretiert. Auch hier kann die Verriegelung manuell oder über gegebenenfalls auch fernsteuerbare Einrichtungen gelöst werden. Ist der Schaltstift 9 in der Einschaltstellung verriegelt, dann reicht für die Auslösung der Verriegelungsvorrichtung gegebenenfalls ein vom Stromwandler 4 abgeleitetes Auslösesignal.

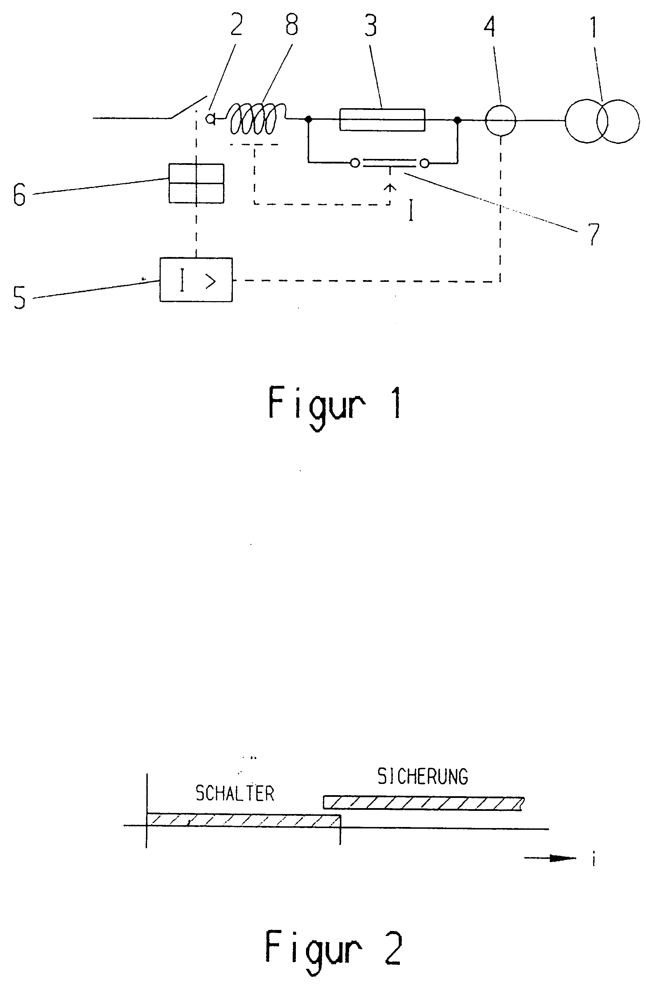

Aus Figur 2 ist zu ersehen, daß der Schalter 2 ein Stromabschaltvermögen aufweist, das sich mit dem unteren Bereich des Auslösestroms der Sicherung 3 überlappt. Es ist somit sichergestellt, daß bei allen im Betrieb auftretenden Stromstärken eine zuverlässige Unterbrechung des zu schaltenden Stromkreises erreicht wird. Durch den stark verzögerten Rücklauf des Schaltstifts 9 bzw. durch seine Verriegelung in Ausschaltstellung ist zudem sichergestellt, daß die geschmolzene Sicherung solange nicht kurzgeschlossen wird, bis der Lasttrennschalter 2 eine für die Betriebsspannung ausreichenden Trennposition seiner Kontaktstücke erreicht hat.

Als Hauptschalter 2 ist vorzugsweise ein Trennleistungsschalter vorgesehen, der ein ausgeprägtes induktives Schaltvermögen aufweist, das bei einem Phasenwinkel cosinus phi von etwa 0,1 bis zu einigen Kiloamperes reicht. Derartige Stromverhältnisse treten insbesondere beim Schalten von Hochspannungs-Leistungstransformatoren 1 auf. So ist der Transformator-Nennstrom ca. 18 Ampere bei einer Transformator-Nennleistung von 630 Kilovoltampere und einer Nennspannung von 24000 Volt. Hierfür wird eine Standart-Sicherung 3 für Hochspannung mit einem Listen-Sicherungs-Nennstrom von 50 Ampere verwendet. Dieser Sicherungstyp hat gemäß den einschlägigen Vorschriften einen etwa doppelten Mindestausschaltstrom, also etwa 100 Ampere. Ab dieser Stromstärke schmilzt die Sicherung 3 bei Dauerbelastung frühestens nach mehreren Minuten. Die Ansprechdauer nimmt jedoch mit steigender Strombelastung ab und liegt bei einem Strom von etwa 2000 bis 3000 Amperes im Millisekundenbereich. Solche Stromstärken treten nur bei schweren Störfällen im Hochspannungsnetz auf, in der Regel bei einem primärseitigen Lichtbogen-Kurzschluß des Transformators. In diesem Fehlerfall spricht der Hilfschalter 7 selbsttätig an und hebt die Überbrückung der Sicherung 3 auf. Die Sicherung 3 wird daher erst mit Strom belastet, wenn der abzuschaltende Strom denjenigen Kennlinienbereich erreicht hat, bei dem die Sicherung 3 in kürzester Frist von ca. 5 ms anspricht bzw. den Stromkreis trennt. Mit dem Hilfschalter 7 wird also die Vorbelastung der Sicherung 3 abgeschnitten und von der Sicherungs-Kennlinie nur der zuverlässig und schnell ansprechende Teil ausgenutzt. Alle anderen, niedrigeren Stromstärken schaltet der Hauptschalter.

Bei einer Ausgestaltung einer Schalteinrichtung gemäß der Erfindung ergibt sich insgesamt eine wirtschaftliche Lösung, bei der ein relativ einfach aufgebauter Hauptschalter zur Anwendung gelangen kann. Zugleich werden die Vorzüge einer Sicherung im selten auftretenden Fall einer außergewöhnlichen Belastung ausgenutzt und die Sicherung im übrigen vor Schädigungen durch übliche Betriebsströme geschützt. Ein Austausch der Sicherung, der mit hohem Zeit-und Kostenaufwand verbunden ist, wird so auf diese wenigen äußerst seltenen Fälle beschränkt und der Hauptschalter braucht nicht für den maximalen Kurzschlußstrom dimensioniert zu sein.

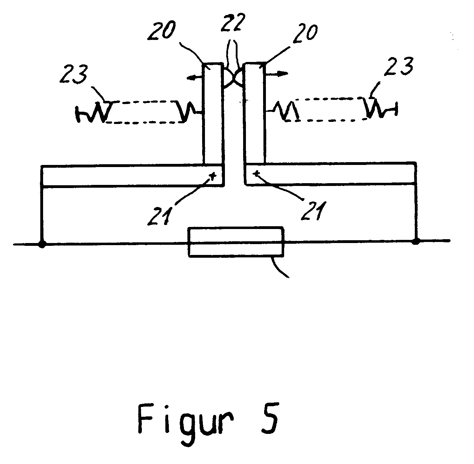

Als Hilfschalter 7 kann beispielsweise auch eine Anordnung gemäß Fig. 5 zur Anwendung gelangen, bei der dynamische Stromkräfte das Öffnen der Schaltstrecke selbsttätig bewirken. Hierzu sind zwei parallel zueinander verlaufende Kontaktarme 20 vorgesehen, von welchen wenigstens einer, vorliegend beide, an benachbarten Enden um je einen Drehpunkt 21 schwenkbar gelagert sind. Im Bereich der gegenüberliegenden Enden tragen die Kontaktarme 20 Kontaktstücke 22. Dabei werden die Kontaktarme 20 durch mechanische Federn 23 so aufeinander zugedrückt, daß sich die Kontaktstücke 22 kontaktieren. Die Kontaktarme 20 werden von Stromschienen 24 getragen, die elektrisch und ggf. auch mechanisch mit den Anschlüssen der Sicherung 3 bzw. deren Träger 12 verbunden sind. Tritt hierbei ein Kurzschlußstrom im zu schaltenden Stromkreis auf, dann werden die gegenparallel vom Kurzschlußstrom durchflossenen Kontaktarme 20 durch die daran auftretenden magnetischen Stromkräfte gegen die Kraft der Federn 23 voneinander abgestoßen und die Kontaktstrecke 22,22 geöffnet. Dabei kann die Massenträgheit der Kontaktarme 20 so groß gewählt werden, daß eine Rückstellung bzw. ein Wiederschließen der Kontakte 22 erst dann eintritt, wenn die Sicherung 3 den Kurzschlußstrom unterbrochen und der deutlich trägere Hauptschalter seine Kontaktstrecke geöffnet hat. Mittel zur Verzögerung der Rückstellung der Kontaktarme 20 sind dann nicht erforderlich, können jedoch ebenfalls zur Anwendung gelangen. Es ist dann sichergestellt, daß der Hilfsschalter nicht schließt, bevor der Hauptschalter den Stromkreis getrennt hat.

## Patentansprüche

1. Schalteinrichtung mit einer Serienschaltung aus einem Schalter (2) und einer Sicherung (3) in einem elektrischen Stromkreis, insbesondere eines Lasttrennschalters und einer Schmelzleitersicherung in Hoch- oder Mittelspannungsschaltanlagen, mit einem in den Stromkreis eingeschalteten Stromwandler (4), der eine Auslöseeinrichtung (5,6) für den Schalter (2) steuert derart, daß der Schalter (2) bei Überschreiten eines zulässigen Stromwertes öffnet, wobei parallel zur Sicherung (3) ein Hilfsschalter (7) geschaltet ist, der bei Überschreiten des zulässigen Stromwertes öffnet, dadurch gekennzeichnet, daß der Hilfsschalter (7) eine Ansprechzeitverzögerung aufweist, durch die kurze hohe Stromimpulse nicht zu seiner Auslösung führen, daß die Ansprechzeit des Hilfsschalters (7) unter der Ausschalteigenzeit des Schalters (2) liegt und daß der Ausschaltzeitpunkt der Sicherung (3) nach dem öffnen des Hilfsschalters (7) bei Überschreiten des zulässigen Stromwertes zeitlich früher als der Ausschaltzeitpunkt des Schalters (2) liegt.

2. Schalteinrichtung nach Anspruch 1, dadurch gekennzeichnet, daß der Schalter (2) ein Stromabschaltvermögen aufweist, das den unteren Bereich des Auslösestroms der Sicherung (3) überlappt.

3. Schalteinrichtung nach Anspruch 1 oder 2, dadurch gekennzeichnet, daß der Hilfsschalter (7) wenigstens einen elektromagnetisch auslösbaren oder antreibbaren Schaltstift (9) aufweist.

4. Schalteinrichtung nach Anspruch 3, dadurch gekennzeichnet, daß der Hilfsschalter (7) mechanisch parallel zur Längsachse der Sicherung (3) angeordnet ist.

5. Schalteinrichtung nach Anspruch 3 oder 4, dadurch gekennzeichnet, daß der Hilfsschalter (7) an den Polen (10,11) des Sicherungsträgers (12) gehalten ist.

6. Schalteinrichtung nach Anspruch 1 oder einem der folgenden, dadurch gekennzeichnet, daß elektrisch in Reihe mit der Sicherung (3) eine Magnetspule (8) geschaltet ist, die den Hilfsschalter (7) steuert.

7. Schalteinrichtung nach Anspruch 3 oder einem der folgenden, dadurch gekennzeichnet, daß der Schaltstift (9) unter der Kraftwirkung einer Feder (15) steht.

8. Schalteinrichtung nach Anspruch 7, dadurch gekennzeichnet, daß die Feder (15) eine Druckfeder ist, daß der Schaltstift (9) mit einem magnetischen Anker (14) versehen ist, der mit der Magnetspule (8) zusammen wirkt und daß die Druckfeder (15) so bemessen ist, daß sich erst bei Überschreiten des zulässigen Stromwertes der Anker (14) bewegt und der Schaltstift (9) aus dem Eingriff mit einem feststehenden Gegenkontakt (13) bewegt.

9. Schalteinrichtung nach Anspruch 1 oder einem der folgenden, dadurch gekennzeichnet, daß der Hilfsschalter verzögert in die Wiedereinschaltstellung führbar ist.

10. Schalteinrichtung nach Anspruch 9, dadurch gekennzeichnet, daß dem Schaltstift (9) ein die Rücklaufgeschwindigkeit vermindernder Strömungsdämpfer (14,16) zugeordnet ist.

11. Schalteinrichtung nach Anspruch 10, dadurch gekennzeichnet, daß der Strömungsdämpfer (14,16) einen Kolben (14) bzw. Zylinder (16) mit einem von der Strömungsrichtung abhängig wirkenden Ventil (17) aufweist.

12. Schalteinrichtung nach Anspruch 7 oder einem der folgenden, dadurch gekennzeichnet, daß der Schaltstift in der Einschaltstellung gegen die Kraft der Feder verriegelt ist und daß die Verriegelung bei Überschreiten des zulässigen Stromwertes auslösbar ist.

13. Schalteinrichtung nach Anspruch 12, dadurch gekennzeichnet, daß die Verriegelungsvorrichtung durch das Signal des Stromwandlers lösbar ist.

14. Schalteinrichtung nach Anspruch 8 oder einem der folgenden, dadurch gekennzeichnet, daß der Schaltstift nach der Rontaktöffnung in Öffnungsstellung verriegelt ist.

15. Schalteinrichtung nach Anspruch 1 oder 2, dadurch gekennzeichnet, daß der Hilfschalter (7) zwei parallel zueinander verlaufende Kontaktarme (20) aufweist, von welchen wenigstens einer an einem Ende um einen Drehpunkt (21) schwenkbar gelagert ist und die im Bereich des abgewandten Endes je einen Kontakt (22) tragen und daß die Kontaktarme (20) unter Federkraft gegeneinander gedrückt sind.

## Claims

1. Switchgear with a series circuit consisting of a switch (2) and a fuse (3) in an electric circuit, in particular of a switch disconnector and of a fusible element fuse in high- or medium-voltage switching stations, having a current transformer (4) connected in the circuit and operating a tripping device (5, 6) for the switch (2) in such a manner that the switch (2) opens if a permissible current value is exceeded, in which case an auxiliary switch (7) connected in parallel to the fuse (3) opens if a permissible current value is exceeded, characterised in that the auxiliary switch (7) has a response time delay, due to which the short high current pulses do not lead to its release, in that the response time of the auxiliary switch (7) is below the opening time of the switch (2), and in that the moment of disconnection of the fuse (3) after opening of the auxiliary switch (7) when the permissible current value is exceeded is earlier than the moment of disconnection of the switch (2).

2. Switchgear according to claim 1, characterised in that the switch (2) has a current cut-out capacity which overlaps the lower range of the tripping current of the fuse (3).

3. Switchgear according to claim 1 or 2, characterised in that the auxiliary switch (7) has at least one contact pin (9) capable of being tripped or actuated by electromagnetic means.

4. Switchgear according to claim 3, characterised in that the auxiliary switch (7) is disposed mechanically parallel to the longitudinal axis of the fuse (3).

5. Switchgear according to claim 3 or 4. characterised in that the auxiliary switch (7) is held at the poles (10,11) of the fuse holder (12).

6. Switchgear according to claim 1 or one of the subsequent claims, characterised in that a magnetic coil (8) controlling the auxiliary switch (7) is connected electrically in series with the fuse (3).

7. Switchgear according to claim 3 or one of the subsequent claims, characterised in that the contact pin (9) is under the force of a spring (15).

8. Switchgear according to claim 7. characterised in that the spring (15) is a pressure spring, in that the contact pin (9) is provided with a magnetic armature (14) cooperating with the magnetic coil (8), and in that the pressure spring (15) is so dimensioned that the armature (14) does not move until the permissible current value has been exceeded and the contact pin (9) has moved out of engagement with a fixed countercontact (13).

9. Switchgear according to claim 1 or one of the subsequent claims, characterised in that the auxiliary switch can be moved into the reconnecting position in a delayed manner.

10. Switchgear according to claim 9, characterised in that a flow damper (14, 16) for reducing the resetting speed is associated with the contact pin (9).

11. Switchgear according to claim 10, characterised in that the flow damper (14, 16) has a piston (14) or cylinder (16) with a valve (17) acting according to the direction of flow.

12. Switchgear according to claim 7 or one of the subsequent claims, characterised in that the contact pin is locked in the connecting position against the force of the spring and can be tripped when the permissible current value is exceeded.

13. Switchgear according to claim 12, characterised in that the locking device is capable of being released by the signal from the current transformer.

14. Switchgear according to claim 8 or one of the subsequent claims, characterised in that the contact pin is locked in the open position after opening of the contact.

15. Switchgear according to claim 1 or 2, characterised in that the auxiliary switch (7) has two contact arms (20) extending parallel to one another, at least one of these being pivotably mounted at one end about a pivotal point (21) and carrying a respective contact (22) at the remote end. and in that the contact arms (20) are pressed against one another under the force of a spring.

## Revendications

1. Dispositif de commutation comportant un interrupteur (2) et un organe de protection (3) montés en série dans un circuit électrique, en particulier un sectionneur de coupure en charge et un fusible dans des installations de distribution à haute ou moyenne tension, comportant un convertisseur de courant (4) monté dans le circuit, qui commande un dispositif de déclenchement (5, 6) de l'interrupteur (2), de manière que l'interrupteur (2) s'ouvre lorsqu'est dépassée une valeur admissible du courant, un interrupteur auxiliaire (7), qui est monté en parallèle au fusible (3), s'ouvrant lorsqu'est dépassée la valeur admissible du courant, caractérisé en ce que l'interrupteur auxiliaire (7) présente un retardement à la réponse, par lequel les fortes impulsions électriques de courte durée ne provoquent pas son déclenchement, en ce que le temps de réponse de l'interrupteur auxiliaire (7) est inférieur au temps de coupure de l'interrupteur (2) et en ce que l'instant de coupure du fusible (3) après ouverture de l'interrupteur auxiliaire (7), en cas de dépassement de la valeur admissible du courant, se situe dans le temps, avant l'instant de coupure de l'interrupteur (2).

2. Dispositif de commutation selon la revendication 1, caractérisé en ce que l'interrupteur (2) présente un pouvoir de coupure qui chevauche la plage inférieure du courant de déclenchement du fusible (3).

3. Dispositif de commutation selon la revendication 1 ou 2, caractérisé en ce que l'interrupteur auxiliaire (7) comporte au moins une broche de commutation (9) pouvant être déclenchée ou entraînée électromagnétiquement.

4. Dispositif de commutation selon la revendication 3, caractérisé en ce que l'interrupteur auxiliaire (7) est mécaniquement parallèle à l'axe longitudinal du fusible (3).

5. Dispositif de commutation selon la revendication 3 ou 4, caractérisé en ce que l'interrupteur auxiliaire (7) est fixé aux pôles (10, 11) du porte-fusible (12).

6. Dispositif de commutation selon la revendication 1 ou l'une des revendications suivantes, caractérisé en ce qu'une bobine magnétique (8), qui commande l'interrupteur auxiliaire (7), est montée électriquement en série avec le fusible (3).

7. Dispositif de commutation selon la revendication 3 ou l'une des revendications suivantes, caractérisé en ce que la broche de commutation (9) est soumise à la force d'un ressort (15).

8. Dispositif de commutation selon la revendication 7, caractérisé en ce que le ressort (15) est un ressort de pression, en ce que la broche de commutation (9) est pourvue d'une armature (14) magnétique qui coopère avec la bobine magnétique (8) et en ce que le ressort de pression (15) a des dimensions telles qu'en cas de dépassement seulement de la valeur admissible du courant, l'armature (14) se déplace et la broche de commutation (9) se dégage d'un contre-contact (13) fixe.

9. Dispositif de commutation selon la revendication 1 ou l'une des revendications suivantes, caractérisé en ce que l'interrupteur auxiliaire peut être amené de manière retardée dans la position de réenclenchement.

10. Dispositif de commutation selon la revendication 9, caractérisé en ce qu'à la broche de commutation (9) est associé un amortisseur de courant (14, 16) réduisant la vitesse de retour.

11. Dispositif de commutation selon la revendication 10, caractérisé en ce que l'amortisseur de courant (14, 16) comporte un piston (14) ou un cylindre (16) avec une soupape (17) agissant en fonction du sens d'écoulement.

12. Dispositif de commutation selon la revendication 7 ou l'une des revendications suivantes, caractérisé en ce que la broche de commutation est verrouillée dans la position d'enclenchement à l'encontre de la force du ressort et en ce que le verrouillage peut être supprimé en cas de dépassement de la valeur admissible du courant.

13. Dispositif de commutation selon la revendication 12, caractérisé en ce que le dispositif de verrouillage peut être déverrouillé par le signal du convertisseur de courant.

14. Dispositif de commutation selon la revendication 8 ou l'une des revendications suivantes, caractérisé en ce que la broche de commutation est verrouillée en position d'ouverture, après ouverture du contact.

15. Dispositif de commutation selon la revendication 1 ou 2, caractérisé en ce que l'interrupteur auxiliaire (7) comporte deux bras de contact (20) parallèles entre eux, dont un au moins est monté à une extrémité de manière à pivoter autour d'un point de rotation (21) et qui portent chacun un contact (22), dans la zone de l'extrémité opposée, et en ce que les bras de contact (20) sont pressés l'un contre l'autre par la force d'un ressort.
